Europäisches Patentamt

European Patent Office

Office européen des brevets

(11) Veröffentlichungsnummer : **0 094 031**
**B1**

(12) **EUROPÄISCHE PATENTSCHRIFT**

(45) Veröffentlichungstag der Patentschrift :
17.08.88

(51) Int. Cl.⁴ : **H 04 L   9/00**

(21) Anmeldenummer : 83104400.3

(22) Anmeldetag : 04.05.83

(54) **Verfahren zum Übertragen von verschlüsselten Daten.**

(30) Priorität : 07.05.82 DE 3217261

(43) Veröffentlichungstag der Anmeldung :
16.11.83 Patentblatt 83/46

(45) Bekanntmachung des Hinweises auf die Patenterteilung : 17.08.88 Patentblatt 88/33

(84) Benannte Vertragsstaaten :
**BE CH GB LI NL**

(56) Entgegenhaltungen :
EP-A- 0 026 458
DE-C- 1 537 401
1979 NATIONAL TELECOMMUNICATIONS CONFERENCE RECORD, Band 3, 27.-29. November 1979, Seiten 32.4.1 - 32.4.5, New York, US; W.L. ELDEN: "Proposed ANSI level 4 transport encryption standard"

(73) Patentinhaber : **Siemens Aktiengesellschaft Berlin und München**
**Wittelsbacherplatz 2**
**D-8000 München 2 (DE)**

(72) Erfinder : **Grenzebach, Kurt, Ing. grad.**
**Zur Biberkampfbahn 13**
**D-6440 Bebra (DE)**
Erfinder : **Hopf, Wolfgang, Ing. grad.**
**Deichwiese 12**
**D-6432 Heringen (DE)**

## Beschreibung

Die Erfindung bezieht sich auf ein Verfahren zum Übertragen von verschlüsselten Daten, entsprechend dem Oberbegriff des Patentanspruchs 1.

Es ist bereits allgemein bekannt, Schlüsselgeräte, die in einer sendenden und einer empfangenden Station angeordnet sind, sowohl zeichenmäßig als auch hinsichtlich des verwendeten Schlüssels zu synchronisieren, so daß die Ver- bzw. Entschlüsselung aus den gleichen Grundstellungen heraus synchron erfolgen kann. Dies wird durch die Übertragung von schlüsselgerätespezifischen Daten von der sendenden zur empfangenden Station erreicht, ein derartiges Verfahren ist beispielsweise aus der EP-A-0 026 458 bekannt.

Aus der DE-C-1 537 401 ist ein Verfahren zum Übertragen von verschlüsselten Daten bekannt, bei dem durch das Schlüsselgerät beim sendenden Teilnehmer anschließend an eine einen Geheimtext ankündigende Kennung selbsttätig ein Spruchschlüssel einblendbar ist, mit dessen Hilfe der anschließende Geheimtext mit einem Grundschlüssel verschlüsselt wird.

Weiterhin ist es bereits bekannt, Daten von einer sendenden Station zu einer empfangenden Station entsprechend einer vorgegebenen Übertragungsprozedur durch Datenblöcke zu übertragen. Ein Beispiel für eine derartige prozedurabhängige Datenübertragung ist eine Übertragung entsprechend der CCITT-Empfehlung X. 25 in einem paketvermittelten Datennetz. Dieses Datennetz ist in der Bundesrepublik Deutschland unter der Bezeichnung Datex-P bekannt geworden. In diesem paketvermittelten Datennetz werden die von der sendenden Station zur empfangenden Station zu übertragenden Nachrichten in einzelne Pakete zerlegt. Jedes Paket erhält einen eigenen Kopf mit einem Steuer- und einem Adressfeld, sowie eine eigene Prüfzeichenfolge. Die maximale Paketlänge beträgt 128 Oktetts. Das Zerlegen der Nachricht unter Zusammensetzen nach der Übertragung wird von der entsprechenden Datenendeinrichtung selbst vorgenommen. Die Datenendeinrichtungen sind an entsprechende Paketvermittlungsstellen, die untereinander verbunden sind, angeschlossen. Die jeweils empfangende Paketvermittlungsstelle überprüft jedes Paket auf Übertragungsfehler. Fehlerfrei empfangene Pakete werden mit einer Positivquittung beantwortet. Pakete, die mit Fehlern behaftet sind, werden durch Aussenden einer Negativquittung erneut angefordert. Die einzelnen Pakete können auf unterschiedlichen Wegen übertragen werden. Dadurch wird eine schnelle Anpassung an den jeweiligen Belegungszustand der Übertragungsstrecken und der Paketvermittlungsstellen erreicht.

Die Übertragung kann über gewählte Verbindungen oder feste Verbindungen erfolgen. Bei den gewählten Verbindungen werden die Datenendeinrichtungen der sendenden und der empfangenden Station nur zeitweise über das Datennetz miteinander verbunden. Es sind daher Phasen des Verbindungsaufbaus, der Datenübertragung sowie der Verbindungsauslösung vorhanden. Bei der festen Verbindung ist keine Verbindungsaufbau- und Verbindungsauslösungsphase erforderlich. Die eigentliche Datenübertragung erfolgt in ähnlicher Weise wie bei der gewählten Verbindung. Beide Arten der Verbindung sind virtuelle Verbindungen, d. h. die Übertragung kann über unterschiedliche Übertragungsstrecken erfolgen, erscheint dem Benutzer jedoch derart, als ob eine einzige physikalische Verbindung vorhanden wäre.

Die gemäß der CCITT-Empfehlung X. 25 definierte Schnittstelle zur Datenendeinrichtung ist in drei Funktionsebenen unterteilt, von denen die Ebene 1 den Aufbau des Verbindungsweges und die elektrischen und funktionellen Eigenschaften der Schnittstelle beschreibt, die Ebene 2 die Übertragungsprozedur für die Übertragung der Pakete zwischen der Datenendeinrichtung und der Paketvermittlungsstelle angibt, und die Ebene 3 die Paketformate und den Ablauf der Paketübertragung zwischen der Datenendeinrichtung und der Paketvermittlungsstelle bei einem virtuellen Ruf und einer virtuellen Standverbindung festlegt.

Falls die Übertragung der Daten verschlüsselt erfolgt, ist es erforderlich, von einem Schlüsselgerät beim sendenden Teilnehmer zu einem Schlüsselgerät beim empfangenden Teilnehmer schlüsselgerätespezifische Daten zu übertragen. Der Erfindung liegt daher die Aufgabe zugrunde, über ein Datennetz, bei dem die Daten blockweise nach einer vorgegebenen Datenübertragungsprozedur übertragen werden, schlüsselgerätespezifische Daten prozedurkonform zu übertragen.

Erfindungsgemäß wird die Aufgabe bei dem Verfahren der eingangs genannten Art durch die im kennzeichnenden Teil des Patentanspruches 1 angegebenen Merkmale gelöst.

Der Erfindung liegt der Gedanke zugrunde, in jeweils mindestens einem Datenblock die Benutzerdaten durch die schlüsselgerätespezifischen Daten zu ersetzen und die übertragungsspezifischen Daten, die vorzugsweise im Kopf des Datenblocks untergebracht sind, unverändert beizubehalten. Es ist denkbar, die Benutzerdaten, die durch die schlüsselgerätespezifischen Daten ersetzt wurden, im Schlüsselgerät zwischenzuspeichern und nach der Übertragung des Datenblocks mit den schlüsselgerätespezifischen Daten im Schlüsselgerät selbst einen Datenblock zu erzeugen, der wiederum bei unverändertem Kopf nun die Benutzerdaten enthält. Um zu verhindern, daß die Datenendeinrichtung während der Übertragung der schlüsselgerätespezifischen Daten weitere Datenblöcke abgibt, täuscht das Schlüsselgerät der Datenendeinrichtung vor, daß es nicht empfangsbereit sei. Anstelle der Zwischenspeicherung der Benutzerdaten in dem Schlüsselgerät erweist es sich auch als zweckmäßig, vom Schlüsselgerät der empfangenden Station nach

dem Empfang der schlüsselgerätespezifischen Daten an die dortige Datenendeinrichtung eine Rücksetzanzeige abzugeben, die ihrerseits eine Rücksetzanforderung an die Datenendeinrichtung der sendenden Station zur Folge hat, und eine Wiederholung des entsprechenden Datenblocks veranlaßt. Anschließend erfolgt die Datenübertragung in an sich bekannter Weise, wobei die Benutzerdaten vom Schlüsselgerät in der sendenden Station verschlüsselt und vom Schlüsselgerät in der empfangenden Station entschlüsselt werden.

Falls die Übertragung der Daten nicht über eine Standverbindung sondern über ein Vermittlungsnetz erfolgt, erfolgt der Verbindungsaufbau und der Verbindungsabbau in an sich bekannter Weise, wobei das Schlüsselgerät transparent ist, d. h. alle für den Verbindungsaufbau und -abbau erforderlichen Datenblöcke unverändert durchgeschaltet werden.

Das Verfahren gemäß der Erfindung eignet sich insbesondere bei einer Übertragung der Daten in einem System entsprechend der CCITT-Empfehlung X. 25. Zweckmäßigerweise wird der Datenblock mit den schlüsselgerätespezifischen Daten zu Beginn der Übertragung übertragen. Es ist jedoch auch möglich, Datenblöcke mit den schlüsselgerätespezifischen Daten nach jeweils einer vorgegebenen Anzahl von Datenblöcken wiederholt zu übertragen oder die schlüsselgerätespezifischen Daten auf mehrere Datenblöcke aufzuteilen. Gegebenenfalls können auch die Datenblöcke mit den schlüsselgerätespezifischen Daten auch besonders gekennzeichnet werden, so daß das Schlüsselgerät in der empfangenden Station alle Datenblöcke auf dieses besondere Kennzeichen hin untersucht und den entsprechenden Datenblock entnimmt. Dies trifft insbesondere dann zu, wenn die Übertragung über eine Standverbindung erfolgt.

Ein Ausführungsbeispiel des Verfahrens gemäß der vorliegenden Erfindung wird im folgenden näher erläutert. Es zeigen

Fig. 1 eine Datenübertragungsanordnung unter Verwendung eines Paketvermittlungsnetzes,

Fig. 2 den Aufbau eines Datenblocks,

Fig. 3 die einzelnen Betriebsphasen während einer Datenübertragung und

Fig. 4 ein Blockschaltbild eines Schlüsselgeräts.

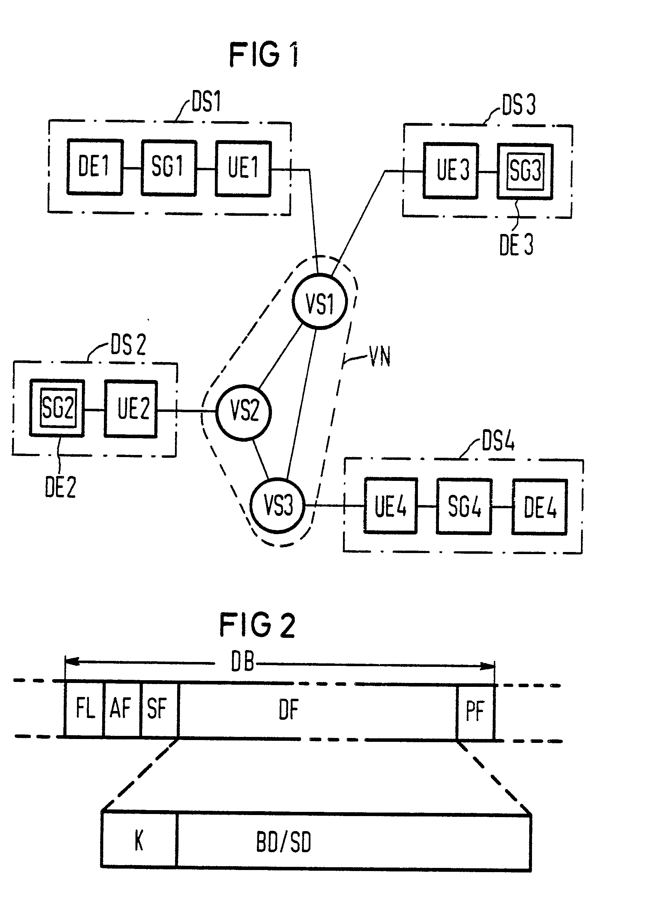

Bei der in Fig. 1 dargestellten Datenübertragungsanordnung sind an einem Paketvermittlungsnetz VN mit mehreren Paketvermittlungsstellen VS1 bis VS3 Datenstationen DS1 bis DS4 angeschlossen. Die Datenstationen DS1 und DS4 enthalten jeweils eine Datenendeinrichtung DE1 bzw. DE4, ein nachgeschaltetes externes Schlüsselgerät SG1 bzw. SG4 und eine Übertragungseinheit UE1 bzw. UE4. Bei den Datenstationen DS2 und DS3 ist das Schlüsselgerät SG2 bzw. SG3 in der Datenendeinrichtung DE2 bzw. DE3 integriert. Für eine verschlüsselte Übertragung von Daten, beispielsweise von der Datenstation DS1 zur Datenstation DS2 ist es notwendig, daß in beiden Datenstationen der gleiche Kryptoschlüssel vorliegt. Hierzu ist es erforderlich, die Schlüsselgeräte SG1 und SG2 aus bestimmten Grundstellungen heraus arbeiten zu lassen. Dies wird durch die Übertragung von schlüsselgerätespezifischen Daten von der Datenstation DS1 zur Datenstation DS2 erreicht. Die schlüsselgerätespezifischen Daten können auch besondere Kryptoschlüssel enthalten. Die Übertragung der schlüsselgerätespezifischen Daten muß mit der gleichen Datenübertragungsprozedur innerhalb des Paketvermittlungsnetzes VN erfolgen, mit der auch die Benutzerdaten übertragen werden. Die Datenübertragungsprozedur ist im vorliegenden Ausführungsbeispiel eine Übertragungsprozedur, wie sie in der CCITT-Empfehlung X. 25 beschrieben ist. Der Verbindungsaufbau von der Datenstation DS2 wird durch die Datenendeinrichtung DE1 und DE2 veranlaßt. Die Schlüsselgeräte SG1 und SG2 sind in diesem Fall transparent und schalten die für den Verbindungsaufbau und- abbau erforderlichen Datenblöcke unverändert durch.

Bei der Übertragung der Benutzerdaten empfängt das Schlüsselgerät SG1 den ersten Datenblock mit Benutzerdaten von der Datenendeinrichtung DE1 und übernimmt alle wichtigen Daten des Übertragungsrahmens und bildet einen neuen Datenblock, bei dem die Benutzerdaten durch die schlüsselgerätespezifischen Daten ersetzt sind. Dieser Datenblock wird als erster Datenblock von der Datenstation DS1 zur Datenstation DS2 übertragen und verbleibt dort im Schlüsselgerät SG2. Anschließend wird der Datenblock mit den ursprünglichen Benutzerdaten übertragen und an der Datenendeinrichtung DE2 ausgegeben.

Bei der Verwendung einer Standverbindung werden die Datenblöcke mit den schlusselgerätespezifischen Daten nach einer vorgegebenen Anzahl von Datenblöcken prozedurgerecht eingefügt. Zweckmäßigerweise werden sie zur Erhöhung der Erkennungssicherheit durch Steuerzeichen besonders gekennzeichnet.

Jeder übertragene Datenblock DB beginnt, wie in Fig. 2 dargestellt, mit einen Kopf, der in drei aufeinanderfolgenden Zeichen FL, AF und SF mit jeweils 8 Bits die für die Durchführung der Datenübertragung benötigten Informationen enthält. Den Anfand des Datenblocks DB bildet die Blockbegrenzung FL, die zur Herstellung des Bitsynchronismus zwischen der sendenden und der empfangenden Datenstation dient. Das anschließende Adressfeld AF gibt an, ob der Datenblock DB an die Datenendeinrichtung DE oder an die Übertragungseinheit UE gerichtet ist und gleichzeitig, ob es sich bei dem jeweiligen Block um einen Befehl oder um eine Meldung handelt, denn Befehle werden mit der Adresse der Gegenstelle und Meldungen mit der eigenen Adresse gekennzeichnet. Das anschließende Steuerfeld SF weist auf den Typ des Datenblocks DB hin. Es wird hier unterschieden zwischen Informations- und Steuerdatenblöcken für die empfangende Datenendeinrichtung DE.

Das Datenfeld DF bildet das eigentliche Paket der Ebene 3. Jeder Datenblock DB wird durch eine Prüfzeichenfolge PF oder durch eine weitere Blockbegrenzung FL abgeschlossen.

Für die Prüfzeichenfolge PF werden aus dem Gesamtbitstrom eines Datenblocks DB Zeichen abgeleitet, die in zwei Oktetts dargestellt werden. In der empfangenden Datenstation DS2 durchläuft der Datenblock DB den gleichen Algorithmus und die bei der Aussendung des Datenblocks DB hinzugefügte und die in der empfangenden Station generierte Prüfzeichenfolge PF werden auf ihre Übereinstimmung hin miteinander verglichen. Stimmen sie nicht überein, so wird der Datenblock DB als fehlerhaft übertragen angesehen und nicht quittiert.

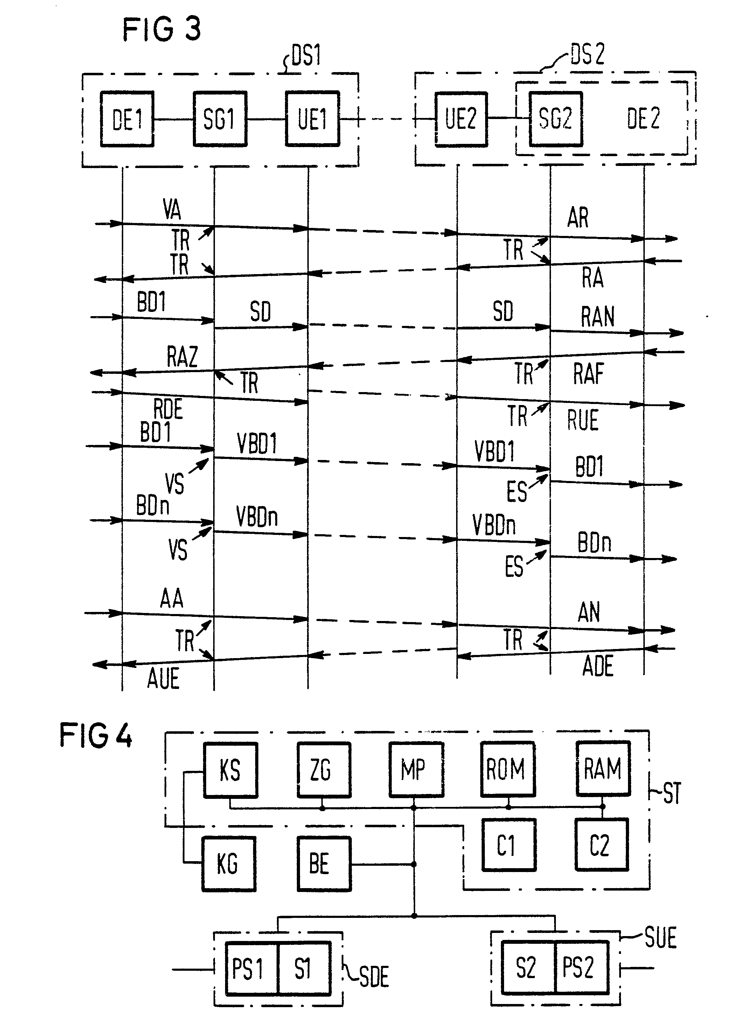

Das Datenfeld DF wird aus einem Kopf K und einem Bereich für Benutzerdaten BD gebildet. Der Kopf K enthält Steuerinformationen, die angeben, ob die Benutzerdaten BD Nutzdaten oder Steuerdaten darstellen. Diese Steuerdaten stellen Pakete für die Verbindungsanforderung, Verbindungsauslösung, Flußsteuerung, Unterbrechung, Rücksetzung und Wiederholung dar. Anstelle der Benutzerdaten BD können auch schlüsselgerätespezifische Daten SD von dem Schlüsselgerät SG1 in der sendenden Datenstation DS1 zum Schlüsselgerät SG2 in der empfangenden Datenstation DS2 übertragen werden. Der Kopf K im Datenfeld DF, die Blockbegrenzung FL, das Adressfeld AF und das Steuerfeld SF bleiben dabei unverändert. Weitere Einzelheiten der Übertragung der schlüsselgerätespezifischen Daten werden im folgenden anhand der Figur 3 beschrieben.

Bei der Darstellung in Fig. 3 sind die Betriebsphasen einer gewählten virtuellen Verbindung zwischen der Datenstation DS1 und der Datenstation DS2 dargestellt. Zum Aufbau der Verbindung erzeugt die Datenendeinrichtung DE1 ein Verbindungsanforderungspaket, das zur Datenstation DS2 übertragen wird. Das Schlüsselgerät SG1 ist in diesem Fall transparent, was jeweils durch den Pfeil TR dargestellt wird. Auf Grund des Verbindungsanforderungspakets wird der Datenendeinrichtung DE2 ein ankommender Ruf AR mitgeteilt. Die Annahme des Rufs RA wird quittiert und die Herstellung der Verbindung wird der Datenendeinrichtung DE1 angezeigt.

Falls in den Datenstationen DS1 und DS2 keine Schlüsselgeräte vorgesehen sind, beginnt nun die eigentliche Datenübertragung in bekannter Weise. Bei der Verwendung der Schlüsselgeräte SG1 und SG2 werden jedoch zunächst schlüsselgerätespezifische Daten übertragen. Die Datenendeinrichtung DE1 erzeugt, in gleicher Weise wie bei der üblichen Datenübertragung den ersten Datenblock DB mit Benutzerdaten BD1. Das Schlüsselgerät SG1 entfernt aus diesem Datenblock DB die Benutzerdaten DB1 und ersetzt diese durch die schlüsselgerätespezifischen Daten SD. Gleichzeitig teilt es der Datenendeinrichtung DE1 durch Signale NE mit, daß es nicht empfangsbereit sei, um zu verhindern, daß die Datenendeinrichtung DE1 weitere Datenblöcke DB abgibt. Die schlüsselgerätespezifischen Daten SD werden anstelle der Benutzerdaten BD1 im ersten Datenblock DB zur Datenstation DS2 übertragen. Dort werden sie im Schlüsselgerät SG2 erkannt und zurückbehalten. Anschließend werden die Schlüsselgeräte SG1 und SG2 unter Verwendung der schlüsselgerätespezifischen Daten synchronisiert. Das Schlüsselgerät SG2 gibt an die Datenendeinrichtung DE2 eine Rücksetzanzeige RAN ab, die eine Rücksetzanforderung RAF zur Folge hat, die her Datenendeinrichtung DE1 als Rücksetzanzeige RAZ mitgeteilt wird. Die Datenendeinrichtung DE1 sendet ihrerseits eine Rücksetzbestätigung RDE bzw. RUE zur Datenstation DS2. Infolge der Rücksetzanzeige RAZ wiederholt die Datenendeinrichtung DE1 den ersten Datenblock DB und gibt ihn an das Schlüsselgerät SG1 ab.

Durch die schlüsselgerätespezifischen Daten SD sind die beiden Schlüsselgeräte SG1 und SG2 synchronisiert und nun zur Verschlüsselung bzw. Entschlüsselung der Benutzerdaten BD1 bereit. Das Schlüsselgerät SG1 ist nun nicht mehr transparent, sondern verschlüsselt die Benutzerdaten BD1 und überträgt die verschlüsselten Benutzerdaten VBD1 zur Datenstation DS2. Dort werden sie im Schlüsselgerät SG2 entschlüsselt, was durch die Pfeile VS bzw. ES dargestellt ist. Die entschlüsselten Benutzerdaten BD1 werden nun der Datenendeinrichtung DE2 zugeführt. Dieser Ver- bzw. Entschlüsselungsvorgang wiederholt sich solange, bis der letzte Datenblock DB mit den Benutzerdaten BDn in Form von verschlüsselten Benutzerdaten VBDn übertragen und wieder als Benutzerdaten BDn der Datenendeinrichtung DE2 zugeführt wurde.

Anschließend wird die Verbindung in an sich bekannter Weise wieder abgebaut, wobei die Schlüsselgeräte SG1 und SG2 wieder transparent sind. Die Datenendeinrichtung DE1 erzeugt zunächst eine Auslösungsanforderung AA, die als Auslösungsanzeige AN der Datenendeinrichtung DE2 zugeführt wird. Diese erzeugt ihrerseits eine Auslösebestätigung ADE und auch seitens der Übertragungseinheit UE1 wird eine Auslösebestätigung AUE erzeugt und der Datenendeinrichtung DE1 zugeführt.

Weitere schlüsselgerätespezifische Daten SD können nach jeweils einer vorgegebenen Anzahl von Datenblöcken DB mit Benutzerdaten BD übertragen werden. Es ist auch möglich, die schlüsselgerätespezifischen Daten auf mehrere Datenblöcke DB aufzuteilen. Weiterhin ist es denkbar, die Benutzerdaten BD1 des ersten Datenpakets im Schlüsselgerät SG1 zwischenzuspeichern und dort nach der Übertragung der schlüselgerätespezifischen Daten selbsttätig einen weiteren Datenblock DB zu erzeugen, der die Benutzerdaten BD1 enthält.

Falls anstelle der gewählten virtuellen Verbindung eine feste virtuelle Verbindung vorgesehen ist, erfolgt die Übertragung der Benutzerdaten BD in entsprechender Weise, jedoch entfallen selbstverständlich die Verbindungsaufbau- und die Verbindungsabbauphase. Es ist auch denkbar, insbesondere bei der Übertragung bei einer festen virtuellen Verbindung die Blöcke, die die schlüs-

selgerätespezifischen Daten SD enthalten, besonders zu kennzeichnen.

Das in Fig. 4 dargestellte Schlüsselgerät SG enthält eine Steuereinheit ST, die vorzugsweise mit einem Mikrorechner versehen ist. Der Mikrorechner wird in an sich bekannter Weise aus einem Mikroprozessor MP, einem Zeitgeber ZG, einem Festwertspeicher ROM und einem Schreib-Lesespeicher RAM gebildet, die gemeinsam an einem Datenbus angeschlossen sind. Weiterhin enthält die Steuereinheit ST Steuereinrichtungen C1 und C2, die dem Mikrorechner zugeordnet sind und einen direkten Speicherzugriff (DMA) bzw. Unterbrechungsanforderungen bearbeiten.

An dem Datenbus DB ist außerdem eine Kryptogenerator-Schnittstelle KS angeschlossen, die die Verbindung der Steuereinheit ST zu Kryptogeneratoren KG herstellt. An dem Datenbus ist weiterhin eine Bedieneinheit BE angeschlossen, die mit Bedienungselementen für das Schlüsselgerät SG versehen ist. Weiterhin sind an dem Datenbus Schnittstelleneinheiten SDE und SUE angeschlossen, die die Anpassung des Schlüsselgeräts SG an die Datenendeinrichtung DE bzw. an die Übertragungseinheit UE bewirken. Diese Schnittstelleneinheiten SDE und SUE enthalten jeweils Parallel/Serien und Serien/Parallelumsetzer PS1 bzw. PS2 und Steuereinheiten S1 bzw. S2, die die prozedurkonforme Übertragung der Datenblöcke sicherstellen. Derartige Steuereinheiten sind allgemein bekannt und beispielsweise unter der Bezeichnung WD2511 im Handel erhältlich. Sie erfüllen eine Vielzahl von Aufgaben, wie beispielsweise die Datensicherung, die Erzeugung und Bewertung des Blockbegrenzungsfeldes FL, des Adressfeldes AF und des Steuerfeldes SF sowie die Erkennung eines Datenblocks.

Der Mikrorechner überwacht den Datenverkehr zwischen der Datenendeinrichtung DE und der Übertragungseinheit UE und veranlaßt bei einer gewählten virtuellen Verbindung nach dem Verbindungsaufbau bzw. bei einer festen virtuellen Verbindung nach jeweils einer vorgegebenen Anzahl von Datenblöcken DB den Ersatz der Benutzerdaten BD durch die schlüsselgerätespezifischen Daten SD und die entsprechenden Signale, die die Nichtempfangsbereitschaft kennzeichnen. Außerdem veranlaßt der Mikrorechner die Synchronisierung des Kryptogenerators beim Senden bzw. beim Empfangen der schlüsselgerätespezifischen Daten. Schließlich erfolgt auch die Erzeugung der Rücksetzanzeige und die Verschlüsselung sowie die Entschlüsselung der Benutzerdaten BD unter Steuerung des Mikrorechners.

Während des Verbindungsaufbaus und während des Verbindungsabbaus schaltet der Microrechner die jeweils ankommenden Datenblöcke DB zwischen den Schnittstelleneinheiten SDE und SUE unverändert durch.

## Patentansprüche

1. Verfahren zum Übertragen von verschlüsselten Daten von einer sendenden Datenstation (DS1) zu einer empfangenden Datenstation (DS2), bei dem die sendende und die empfangende Datenstation (DS1 bzw. DS2) jeweils eine Datenendeinrichtung (DE1 bzw. DE2), ein Schlüsselgerät (SG1 bzw. SG2) und eine Übertragungseinheit (UE1 bzw. UE2) enthalten und bei dem vom Schlüsselgerät (SG1) der sendenden Datenstation (DS1) zum Schlüsselgerät (SG2) der empfangenden Datenstation (DS2) schlüsselgerätespezifische Daten (SD) übertragen werden, gekennzeichnet durch folgende Verfahrensschritte:

a) bei vorhandener Verbindung zwischen der sendenden Datenstation (DS1) und der empfangenden Datenstation (DS2) gibt die Datenendeinrichtung (DE1) der sendenden Datenstation (DS1) Benutzerdaten (BD) ab, die zusammen mit einem Steuerinformationen enthaltenden Kopf (K) ein Datenfeld (DF) eines Datenblockes (DB) bilden,

b) bei mindestens einem der Datenblöcke (DB) werden die Benutzerdaten (BD) durch die schlüsselgerätespezifischen Daten (SD) ersetzt, wobei der Kopf (K) unverändert bleibt,

c) der Datenblock (DB), dessen Benutzerdaten (BD) durch die schlüsselgerätespezifischen Daten (SD) ersetzt wurde, wird erneut erzeugt und anschließend übertragen.

2. Verfahren nach Anspruch 1, dadurch gekennzeichnet, daß der Datenblock (DB), dessen Benutzerdaten (BD) durch die schlüsselgerätespezifischen Daten (SD) ersetzt wurden, nach einer Wiederholungsanforderung in der Datenendeinrichtung (DE1) der sendenden Datenstation (DS1) erneut erzeugt wird.

3. Verfahren nach Anspruch 1 oder Anspruch 2, dadurch gekennzeichnet, daß das Schlüsselgerät (SG1) der sendenden Datenstation (DS1) während der Erzeugung des Datenblocks (DB) mit den schlüsselgerätespezifischen Daten (SD) an die zugehörige Datenendeinrichtung (DE1) ein Signal (NE) abgibt, das die Nichtempfangsbereitschaft anzeigt.

4. Verfahren nach einem der Ansprüche 1 bis 3, dadurch gekennzeichnet, daß der Datenblock (DB) mit den schlüsselgerätespezifischen Daten (SD) prozedurkonform entsprechend der CCITT-Empfehlung X. 25 übertragen wird.

5. Verfahren nach einem der Ansprüche 1 bis 4, bei dem die Übertragung über eine gewählte Verbindung erfolgt, dadurch gekennzeichnet, daß der Datenblock (DB) mit den schlüsselgerätespezifischen Daten (SD) unmittelbar nach dem Aufbau der Verbindung zwischen der sendenden Datenstation (DS1) und der empfangenden Datenstation (DS2) erfolgt.

6. Verfahren nach einem der Ansprüche 1 bis 4, bei dem die Übertragung über eine feste Verbindung erfolgt, dadurch gekennzeichnet, daß die Übertragung des Datenblocks (DB) mit den schlüsselgerätespezifischen Daten (SD) zu Beginn der Übertragung als erster Datenblock (DB) erfolgt.

7. Verfahren nach Anspruch 6, dadurch gekennzeichnet, daß in demjenigen Datenblock (DB), der die schlüsselgerätespezifischen Daten (SD) enthält, Steuerzeichen vorgesehen sind, mit

denen dieser Datenblock (DB) von einem Datenblock (DB) mit Benutzerdaten (BD) unterscheidbar ist.

8. Verfahren nach einem der Ansprüche 1 bis 7, dadurch gekennzeichnet, daß jeweils nach einer vorgegebenen Anzahl von Datenblöcken (DB) mit Benutzerdaten (BD) ein Datenblock (DB) mit schlüsselgerätespezifischen Daten (SD) übertragen wird.

9. Verfahren nach einem der Ansprüche 1 bis 8, dadurch gekennzeichnet, daß die schlüsselgerätespezifischen Daten (SD) jeweils auf eine Mehrzahl von Datenblöcken (DB) aufgeteilt übertragen werden.

## Claims

1. A method of transmitting enciphered data from a transmitting data station (DS1) to a receiving data station (DS2) in which the transmitting and receiving data stations (DS1 and DS2) each comprise a data terminal device (DE1 and DE2 respectively), a cipher device (SG1 and SG2 respectively) and a transmission unit (UE1 and UE2 respectively), and in which cipher-device-specific data items (SD) are transmitted from the cipher device (SG1) of the transmitting data station (DS1) to the cipher device (SG2) of the receiving station (DS2), characterised by the following process steps ;

a) when a connection exists between the transmitting data station (DS1) and the receiving data station (DS2), the data terminal device (DE1) of the transmitting data station (DS1) emits user data items (BD) which, together with a header (K) containing items of control information, form a data array (DF) of a data block (DB),

b) in the case of at least one of the data blocks (DB) the user data items (BD) are replaced by the cipher-device-specific data items (SD), where the header (K) remains unchanged,

c) the data block (DB) whose user data items (BD) have been replaced by the cipher-device-specific data items (SD) is re-generated and then transmitted.

2. A method as claimed in claim 1, charcterised in that the data block (DB) whose user data items (BD) have been replaced by the cipher-device-specific data items (SD) is re-generated following a repetition request in the data terminal device (DE1) of the transmitting station (DS1).

3. A method as claimed in claim 1 or claim 2, characterised in that during the generation of the data block (DB) containing the cipher-device-specific data items (SD), the cipher device (SG1) of the transmitting data station (DS1) supplies the associated data terminal device (DE1) with a signal which indicates unreadiness for reception.

4. A method as claimed in one of the claims 1 to 3, characterised in that the data block (DB) containing the cipher-device-specific data items (SD) is transmitted in accordance with the correct procedure in accordance with CCITT-recommendation X. 25.

5. A method as claimed in one of the claims 1 to 4, in which transmission takes place via a dialled connection, characterised in that the data block (DB) containing the cipher-device-specific data (SD) occurs immediately following the establishment of the connection between the transmitting data station (DS1) and the receiving data station (DS2).

6. A method as claimed in one of the claims 1 to 4, in which transmission takes place via a permanent connection, characterised in that the transmission of the data block (DB) containing the cipher-device-specific data (SD) takes place at the beginning of the transmission as first data block (DB).

7. A method as claimed in claim 6, characterised in that in the data block (DB) which contains the cipher-device-specific data items (SD) control characters are provided by means of which this data block (DB) can be differentiated from a data block (DB) containing user data (BD).

8. A method as claimed in one of the claims 1 to 7, characterised in that in each case following a predetermined number of data blocks (DB) containing user data items (BD), a data block (DB) containing cipher-device-specific data items (SD) is transmitted.

9. A method as claimed in one of the claims 1 to 8, characterised in that the cipher-device-specific data items (SD) are in each case transmitted distributed amongst a plurality of data blocks (DB).

## Revendications

1. Procédé pour transmettre des données chiffrées d'une station de données (DS1) émettrice à une station de données (DS2) réceptrice, selon lequel les stations émettrice (DS1) et réceptrice (DS2) contiennent chacune un équipement terminal de données (DE1 ou DE2), un appareil de chiffrement (SG1 ou SG2) et une unité de transmission (UE1 ou UE2) et selon lequel des données (SD) spécifiques aux appareils de chiffrement sont transmises depuis l'appareil de chiffrement (SG1) de la station émettrice (DS1) à l'appareil de chiffrement (SG2) de la station réceptrice (DS2), caractérisé en ce que :

a) lorsqu'une liaison existe entre la station émettrice (DS1) et la station réceptrice (DS2), l'équipement terminal (DE1) de la station émettrice (DS1) délivre des données d'usager (BD) qui forment, ensemble avec un en-tête (K) contenant des informations de commande, une section de données (DF) d'un bloc de données (DB),

b) dans au moins l'un des blocs de données (DB), les données d'usager (BD) sont remplacées par les données (SD) spécifiques aux appareils de chiffrement, sans changement de l'en-tête (K) et

c) le bloc de données (DB) dont les données d'usager (BD) ont été remplacées par les données (SD) spécifiques aux appareils de chiffrement, est produit de nouveau et transmis ensuite.

2. Procédé selon la revendication 1, caractérisé en ce que le bloc de données (DB) dont les données d'usager (BD) ont été remplacées par les données (SD) spécifiques aux appareils de chiffrement, est produit de nouveau à la suite d'une demande de répétition dans l'équipement terminal de données (DE1) de la station émettrice (DS1).

3. Procédé selon la revendication 1 ou 2, caractérisé en ce que l'appareil de chiffrement (SG1) de la station émettrice (DS1) délivre à l'équipement terminal (DE1) correspondant, pendant la production du bloc de données (DB) avec les données (SD) spécifiques aux appareils de chiffrement, un signal (NE) qui indique qu'il n'est pas prêt à recevoir.

4. Procédé selon une des revendications 1 à 3, caractérisé en ce que le bloc de données (DB) avec les données (SD) spécifiques aux appareils de chiffrement est transmis conformément à la procédure selon la recommandation X. 25 du CCITT.

5. Procédé selon une des revendications 1 à 4, selon lequel la transmission s'opère par une liaison obtenue par sélection, caractérisé en ce que la transmission du bloc de données (DB) avec les données spécifiques aux appareils de chiffrement s'effectue immédiatement après l'établissement de la liaison entre la station émettrice (DS1) et la station réceptrice (DS2).

6. Procédé selon une des revendications 1 à 4, selon lequel la transmission s'opère par une liaison fixe, caractérisé en ce que la transmission du bloc de données (DB) avec les données (SB) spécifiques aux appareils de chiffrement s'effectue au début de la transmission, en tant que premier bloc de données (DB).

7. Procédé selon la revendication 6, caractérisé en ce que le bloc (DB) contenant les données (SD) spécifiques aux appareils de chiffrement, est pourvu de caractères de commande par lesquels ce bloc (DB) peut être distingué d'un bloc (DB) avec des données d'usager (BD).

8. Procédé selon une des revendications 1 à 7, caractérisé en ce qu'un bloc (DB) avec des données (SD) spécifiques aux appareils de chiffrement est transmis après un nombre préfixé de blocs (DB) avec des données d'usager (BD).

9. Procédé selon une des revendications 1 à 8, caractérisé en ce que les données (SD) spécifiques aux appareils de chiffrement sont transmises en étant réparties sur plusieurs blocs de données (DB).

0 094 031

## FIG 1

## FIG 2

## FIG 3

## FIG 4